# EUROPEAN PATENT SPECIFICATION

(11) **EP 4 108 561 B1**
(45) Date of publication and mention of the grant of the patent: **02.12.2026**
(21) Application number: 21757590.1
(22) Date of filing: 17.02.2021
(51) Int. Cl.: B63B 25/16, B63H 21/38, F17C 9/04

(54) **GAS TREATMENT SYSTEM AND SHIP INCLUDING SAME**
GASBEHANDLUNGSSYSTEM UND SCHIFF DAMIT
SYSTÈME DE TRAITEMENT DE GAZ ET NAVIRE LE COMPRENANT

(30) Priority: 17.02.2020 KR 20200019253; 08.05.2020 KR 20200055463
(43) Date of publication of application: 28.12.2022
(60) Divisional application: 26208198.7
(73) Proprietor: Korea Shipbuilding & Offshore Engineering Co., Ltd., Jongno-gu Seoul 03058 (KR)
(72) Inventor: NOH, Yeel Yong, Seoul 03058 (KR); PARK, Jong Wan, Seoul 03058 (KR); HAN, Sang Moo, Seoul 03058 (KR)
(74) Representative: Betten & Resch
(86) International application number: PCT/KR2021/002020
(87) International publication number: WO 2021/167343

(56) References cited:
- JP-A- 2019 049 216
- KR-A- 20190 071 179
- KR-A- 20190 080 178
- KR-A- 20190 105 841
- KR-A- 20190 105 841
- US-A1- 2019 323 659

## Description

### TECHNICAL FIELD

The present invention relates to a gas treatment system and a ship including the same.

### BACKGROUND ART

In general, Liquefied Petroleum Gas (LPG) is obtained by pressurizing and liquefying a gas using, as a main component, hydrocarbon having a low boiling point, such as propane or butane, among petroleum components. The LPG is charged in a small, light pressure vessel (bombe) to be widely used as a fuel for household use, business use, industrial use, vehicle use, and the like.

The LPG is extracted in a gaseous state from a production area, is liquefied and stored through LPG treatment facilities, is transported by land while being maintained in a liquid phase by an LPG carrier, and then is supplied in various forms to sources of demand.

Since the LPG has a boiling point of about -50 °C, an LPG carrier for carrying the LPG should maintain a temperature lower than the boiling point. Therefore, a storage tank for storing the LPG uses low temperature carbon steel and nickel steel, and reliquefaction facilities are also provided in the LPG carrier.

The LPG carrier conventionally operated an engine, using diesel oil, thereby generating propulsion. However, the diesel oil generates nitrogen oxide (NOₓ), sulfur oxide (SOₓ), and carbon dioxide (CO₂), which are harmful components, in a process in which the diesel oil is burned in an engine for ship propulsion, and the harmful components are discharged in the air. Therefore, there is a problem of contaminating environments.

Accordingly, recently, development of an engine operated using the LPG and development of various systems for supplying the LPG to the engine have continuously conducted to remarkably reduce the pollution of exhaust, as compared with when the diesel oil is used.

KR 2019 0105841 A discloses a vessel using LPG as fuel and a method of effectively supplying LPG fuel to an LPG fuel engine of the vessel using LPG as fuel.

### DISCLOSURE

### TECHNICAL PROBLEM

The present invention is conceived to solve the aforementioned problems. Accordingly, an object of the present invention is to provide a gas treatment system and a ship including the same, which can generate propulsion by using liquefied petroleum gas or ammonia.

### TECHNICAL SOLUTION

The invention is defined by the independent claims. Dependent claims specify embodiments thereof.

In accordance with an aspect of the present invention, there is provided a gas treatment system for treating liquefied gas as heavier hydrocarbons or ammonia, the gas treatment system including: a fuel tank storing liquefied gas as a fuel to be supplied to a propulsion engine of a ship; a liquefied gas supply line supplying the liquefied gas of the fuel tank in a liquid phase to the propulsion engine, the liquefied gas supply line having a high pressure pump provided thereon; a reliquefaction apparatus liquefying boil-off gas generated in a cargo tank storing liquefied gas; and a liquefied gas collection line collecting the liquid liquefied gas discharged from the propulsion engine upstream of the high pressure pump, wherein the reliquefaction apparatus transfers the liquefied boil-off gas to the fuel tank, thereby allowing the liquefied boil-off gas to be supplied to the propulsion engine by the high pressure pump.

Specifically, the liquefied gas collection line may be provided with a decompression valve decompressing surplus liquid liquefied gas which is discharged from the propulsion engine and is mixed with a lubricant, and transfer the surplus liquid liquefied gas mixed with the lubricant, which is used in the propulsion engine, to the liquefied gas supply line upstream of the high pressure pump while passing through the inside of the propulsion engine such that the surplus liquid liquefied gas mixed with the lubricant is reintroduced into the propulsion engine.

Specifically, the liquefied gas collection line may be provided with a cooler cooling the liquefied gas decompressed by the decompression valve to be introduced in a liquid phase into the high pressure pump.

Specifically, the reliquefaction apparatus may include: a compressor compressing in multiple stages the boil-off gas discharged from the cargo tank; a condenser cooling an liquefying the compressed boil-off gas by using a refrigerant; and an intercooler heat-exchanging a portion and the other portion of the boil-off gas liquefied in the condenser with each other, the intercooler transferring the boil-off gas generated by the heat exchange to the compressor.

Specifically, the reliquefaction apparatus may further include a gas-liquid separator separating the boil-off gas liquefied in the condenser into a gaseous phase and a liquid phase. The reliquefaction apparatus may be operated in at least one of a reliquefaction mode in which the liquid phase separated in the gas-liquid separator is transferred to the cargo tank via the intercooler and a fuel supply mode in which the liquid phase separated in the gas-liquid separator is transferred to the fuel tank to be supplied to the propulsion engine.

Specifically, the reliquefaction apparatus may include: a compressor compressing in multiple stages the boil-off gas discharged from the cargo tank; a condenser cooling and liquefying the compressed boil-off gas; and a boil-off gas heat exchanger heat-exchanging boil-off gas transferred from the cargo tank to the compressor and the boil-off gas liquefied in the condenser.

Specifically, the reliquefaction apparatus may further include a gas-liquid separator separating the boil-off gas liquefied in the condenser into a gaseous phase and a liquid phase. The reliquefaction apparatus may be operated in at least one of a reliquefaction mode in which the liquid phase separated in the gas-liquid separator is transferred to the cargo tank via the boil-off gas heat exchanger and a fuel supply mode in which the liquid phase separated in the gas-liquid separator is transferred to the fuel tank to be supplied to the propulsion engine.

In accordance with another aspect, which does not form part of but which is helpful for understanding the present invention, there is provided a gas treatment system for treating liquefied gas as heavier hydrocarbons or ammonia, the gas treatment system including: a liquefied gas supply line supplying liquefied gas stored in a cargo tank in a liquid phase to a propulsion engine, the liquefied gas supply line being provided with a high pressure pump; a reliquefaction apparatus liquefying boil-off gas generated in the cargo tank such that the liquefied boil-off gas is transferred to the high pressure pump; and a liquefied gas collection line collecting the liquid liquefied gas discharged from the propulsion engine upstream of the high pressure pump, wherein the reliquefaction apparatus includes: a condenser cooling and liquefying boil-off gas by using a refrigerant; and a buffer temporarily storing the boil-off gas liquefied in the condenser, and wherein the reliquefaction apparatus has a bypass line allows at least a portion of the boil-off gas to be supplied to the buffer while bypassing the condenser so as to prepare for fluctuation of the pressure of boil-off gas transferred from the buffer to the high pressure pump according to a temperature of the refrigerant.

Specifically, the liquefied gas collection line may be provided with a decompression valve decompressing surplus liquid liquefied gas which is discharged from the propulsion engine and is mixed with a lubricant, and transfer the surplus liquid liquefied gas mixed with the lubricant, which is used in the propulsion engine, to the liquefied gas supply line upstream of the high pressure pump while passing through the inside of the propulsion engine such that the surplus liquid liquefied gas mixed with the lubricant is reintroduced into the propulsion engine.

Specifically, the liquefied gas collection line may be provided with a cooler cooling the liquefied gas decompressed by the decompression valve to be introduced in a liquid phase into the high pressure pump.

Specifically, the buffer may be a gas-liquid separator separating the boil-off gas liquefied in the condenser into a gaseous phase and a liquid phase.

Specifically, the reliquefaction apparatus may transfer the liquefied boil-off gas to the liquefied gas supply line between the cargo tank and the high pressure pump.

Specifically, the reliquefaction apparatus may include: a compressor compressing in multiple stages the boil-off gas discharged from the cargo tank; and an intercooler heat-exchanging a portion and the other portion of the boil-off gas liquefied in the condenser with each other, the intercooler transferring the boil-off gas generated by the heat exchange to the compressor.

Specifically, the reliquefaction apparatus may be operated in at least one of a reliquefaction mode in which the liquid phase separated in the gas-liquid separator is transferred to the cargo tank via the intercooler and a fuel supply mode in which the liquid phase separated in the gas-liquid separator is transferred to the liquefied gas supply line upstream of the high pressure pump to be supplied to the propulsion engine.

In accordance with still another aspect of the present invention, there is provided a liquefied gas carrier including the gas treatment system.

### ADVANTAGEOUS EFFECTS

In the gas treatment system and the ship including the same in accordance with the present invention, liquefied petroleum gas or ammonia can be used as a propulsion fuel, as compared with conventional systems using only diesel oil. Thus, environmental pollution can be reduced, and energy efficiency can be improved.

### BRIEF DESCRIPTION OF THE DRAWINGS

FIG. 1 is a conceptual view illustrating a gas treatment system in accordance with a first embodiment of the present invention.
FIG. 2 is a conceptual view illustrating a gas treatment system in accordance with a second embodiment of the present invention.
FIG. 3 is a conceptual view illustrating a gas treatment system that does not form an embodiment of the present invention.
FIG. 4 is a conceptual view illustrating a gas treatment system that does not form an embodiment of the present invention.
FIG. 5 is a conceptual view illustrating a gas treatment system in accordance with a fifth embodiment of the present invention.
FIG. 6 is a conceptual view illustrating a gas treatment system that does not form an embodiment of the present invention.
FIG. 7 is a conceptual view illustrating a gas treatment system in accordance with a seventh embodiment of the present invention.

### MODE FOR THE INVENTION

Hereinafter, exemplary embodiments are described in detail with reference to the accompanying drawings. For reference, in this specification, liquefied gas may be, as heavier hydrocarbons, LPG (propane, butane or the like), ammonia, or the like. However, the present invention is not limited thereto, and the liquefied gas may include all materials which have boiling points lower than room temperature and have caloric values.

Also, in this specification, it is noted that liquefied gas/boil-off gas is not necessarily limited to a liquid phase or a gaseous phase.

The present invention includes a ship in which a gas treatment system described below. The ship is a concept including all of gas carriers, merchant ships for carrying cargos or people instead of gas, FSRUs, FPSOs, bunkering vessels, offshore plants, and the like, but it is noted that the ship may be a liquefied gas carrier as an example.

Although not shown in drawings of the present invention, it will be apparent that a pressure sensor (PT), a temperature sensor (TT), and the like may be provided at appropriate positions without limiting, and a value measured by each sensor may be variously used without limiting to operations of components described below.

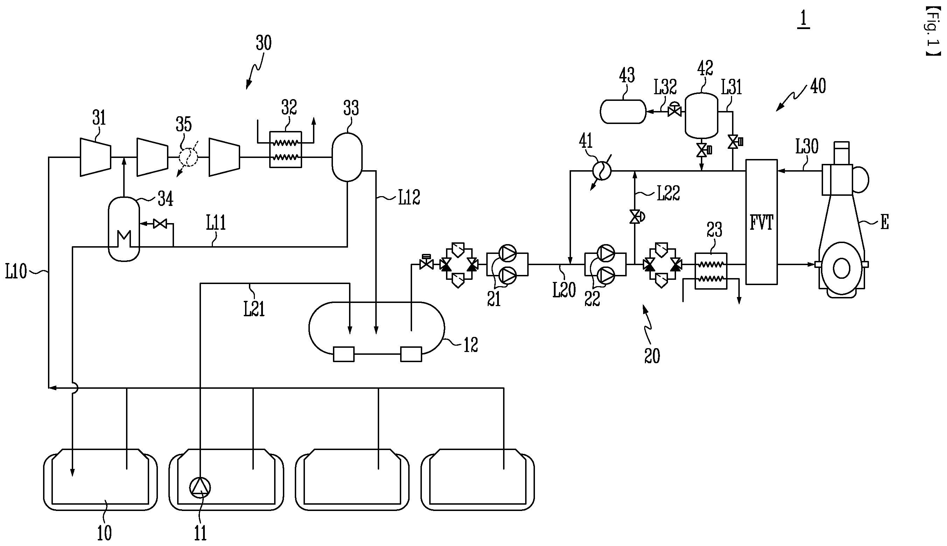

FIG. 1 is a conceptual view illustrating a gas treatment system in accordance with a first embodiment of the present invention.

Referring to FIG. 1, the gas treatment system 1 in accordance with the first embodiment of the present invention includes a gas storage part, a fuel supply part 20, a reliquefaction part 30, and a fuel collection part 40.

The gas storage is a component for storing liquefied gas, and includes a cargo tank 10, a fuel tank 12, and the like.

The cargo tank 10 corresponds to a plurality of tanks for cargos, which are provided inside a ship. When the ship is a kind of ship except the gas carrier, the cargo tank 10 may also be a tank or a container, which is additionally added to the inside or outside of the ship.

The cargo tank 10 is a tank for storing liquefied gas in a low temperature liquid phase at atmospheric pressure, and various heat insulated structures may be added to a wall structure of the cargo tank 10 so as to prevent boil off of the liquefied gas. Also, the cargo tank 10 may be a membrane-type tank, an independence-type tank, or the like, and its shape, resource, or the like is not limited.

A liquefied gas transfer line L21 may be provided from the cargo tank 10 to the fuel tank 12 which will be described later, and the liquefied gas of the cargo tank 10 is transferred to the fuel tank 12 through the liquefied gas transfer line L21. The liquefied gas transferred to the fuel tank 12 is used as a fuel of a propulsion engine E.

For reference, in this specification, the propulsion engine E is sufficient as long as it is a component for propelling the ship, and may be construed as all components capable of directly/indirectly generating propulsion by consuming the liquefied gas, such as a turbine and a fuel cell instead of engines. Also, in this specification, the propulsion engine E may be used as a term including all gas sources of demand, such as an engine for propulsion, an engine for power generation, and a gas combustion apparatus.

A transfer pump 11 may be allocated to the cargo tank 10, and the liquefied gas transfer line L21 may be connected to the transfer pump 11. The transfer pump 11 may be provided inside the cargo tank 10, and be provided as a submerged type pump submerged in the liquefied gas.

The transfer pump 11 may be provided in some of the plurality of cargo tanks 10. The cargo tank 10 is basically for the purpose of cargo transportation, and at least two cargo pumps (loading/unloading pumps, stripping pump, or the like (not shown)) for unloading cargos for each cargo tank 10. In addition to the cargo pump, the transfer pump 11 may be added to at least one cargo tank 10 so as to use the liquefied gas stored inside the cargo tank 10 as a fuel of the propulsion engine E (ME-LGI), or the like.

In an example, when four cargo tanks 10 are provided side by side in a length direction of the ship, the liquefied gas stored in a fourth cargo tank 10 close to an engine room in which the propulsion engine E is accommodated may be transferred to the fuel tank 12 and then be used as the fuel of the propulsion engine E. To this end, the transfer pump 11 may be provided in only the fourth cargo tank 10.

The liquefied gas stored in the cargo tank 10 is naturally boiled off by external heat infiltration, and therefore, boil-off gas is generated in the cargo tank 10. A boil-off gas discharge line L10 for discharging the boil-off gas may be provided in the cargo tank 10. The boil-off gas discharged from the cargo tank 10 may be liquefied and then returned or be used as the fuel of the propulsion engine E. This will be described in detail at a portion at which the reliquefaction part 30 is described below.

The cargo tank 10 may be provided in plurality to respectively store at least two kinds of liquefied gases among liquefied gases (propane, butane, propylene, and the like) using heavier hydrocarbons as a main component. That is, the cargo tank 10 may include a first cargo tank 10 for storing a first kind of liquefied gas and a second cargo tank 10 for storing a second kind of liquefied gas. In an example, the first cargo tank 10 may store propane, and the second cargo tank 10 may store butane or the like.

The boil-off gas of the cargo tank 10 is liquefied through a condenser 32 of the reliquefaction part 30 which will be described later. When the liquefied boil-off gas is configured to be returned to the cargo tank 10, the condenser 32 may be provided as many as kinds of liquefied gases stored in the at least the cargo tank 10 (additionally, a condenser for backup may be provided).

That is, when the cargo tank 10 stores two kinds of liquefied gases, at least three condensers 320 may be preferably provided. In addition, a compressor 31 along with the condenser 32 is provided as a set. Hence, the compressor 31 may be provided in plurality to correspond to the number of condensers 32.

However, in this embodiment, the boil-off gas liquefied by the condenser 32 is not returned to the cargo tank 10 but may be transferred to the fuel tank 12 or the like, so that although the cargo tank 10 is provided to store two or more kinds of liquefied gases, the number of condensers 32 installed (or operated) can be decreased equal to or smaller than the number of kinds of liquefied gases.

That is, the boil-off gas of the cargo tank 10 may be transferred to the condenser 320 through the boil-off gas discharge line L10 to be liquefied by refrigerant heat exchange in the condenser 32, and the liquefied boil-off gas may be transferred to a high pressure pump 22 which will be described later via the fuel tank 12 but may not be returned to the cargo tank 10 (fuel supply mode).

The fuel tank 12 stores the liquefied gas as the fuel to be supplied to the propulsion engine E. The fuel tank 12 may have a type identical to or different from the type of the cargo tank 10 which has an independence type (SPB type or MOSS type) where a large amount of liquefied gas is stored at atmospheric pressure or a membrane type, and have an independence type (Type C or pressure container type) where liquefied gas is stored at high pressure.

The fuel tank 12 may store the liquefied gas at a critical pressure or higher (e.g., 18 bars or so) or store the liquefied gas at less than the critical pressure (e.g., 8 bars or so). A heat insulated structure may be provided on at least one of the inside or outside of the wall structure so as to prevent boil off of the liquefied gas.

The fuel tank 12 may be mounted on an upper deck in the ship, and be provided to be supported by the upper deck through a saddle. The fuel tank 12 may be disposed at a position at which sailing visibility of the ship is covered while being interfered with components (manifold and the like0 for loading/unloading the liquefied gas of the cargo tank 10 on the upper deck. In an example, the fuel tank 12 may be provided at a portside or a starboard of a bow on the upper deck. The fuel tank 12 may be designated as a deck tank.

The fuel tank 12 may be a component for temporarily storing the liquefied gas between the cargo tank 10 and the propulsion engine E. Also, the fuel tank 12 may be a component which has a function of condensing the boil-off gas generated in the cargo tank 10 by using the liquefied gas stored thereinside.

That is, the fuel tank 12 may be used as a recondenser 32 for receiving and condensing the boil-off gas generated in the cargo tank 10 by using the liquefied gas stored thereinside. To this end, a boil-off branch line (not shown) branching off toward the fuel tank 12 upstream of the condenser 32 may be provided on the boil-off gas discharge line L10 extending from the cargo tank 10.

The described-above liquefied gas transfer line L21 may be connected from the cargo tank 10 to the fuel tank 12, and the liquefied gas may be transferred to the fuel tank 12 by the transfer pump 11 submerged in the cargo tank 10. The liquefied gas stored in the fuel tank 12 may be manages at an appropriate level/pressure by considering a sailing state of the ship, and the like.

On the contrary, the liquefied gas may be returned from the fuel tank 12 to the cargo tank 10, but this may be limited to a case where the liquefied gas stored in the fuel tank 12 have the same composition as the liquefied gas stored in the cargo tank 10.

The liquefied gas stored in the fuel tank 12 may be transferred from the fuel tank 12 to the propulsion engine E through a low pressure pump of the fuel supply part 20 which will be described later. A liquefied gas supply line L20 may be provided from the fuel tank 12 to the propulsion engine E. That is, the liquefied gas transfer line L21 is provided from the cargo tank 10 to the fuel tank 12, and the liquefied gas supply line L20 is provided from the fuel tank 12 to the propulsion engine E.

The liquefied gas supply line L20 may also be provided such that the liquefied gas is supplied from the cargo tank 10 to the propulsion engine E while bypassing the fuel tank 12. In this case, the liquefied gas supply line L20 may transfer the liquefied gas of the cargo tank 10 and/or the fuel tank 12 to the propulsion engine E.

The fuel supply part 20 supplies the liquefied gas to the propulsion engine E, thereby operating the propulsion engine E. The fuel supply part 20 includes the low pressure pump 21, the high pressure pump 22, a heat exchanger 23, and the like, and a filter (reference numeral not shown) may be provided at an appropriate position.

The low pressure pump 21 transfers the liquefied gas of the fuel tank 12 to the propulsion engine E. The low pressure pump 21 may be provided at the inside or outside of the fuel tank 12, and be provided on the liquefied gas supply line L20 connected from the fuel tank 12 to the propulsion engine E.

The low pressure pump 21 may pressurize the liquefied gas at a pressure lower than a required pressure of the propulsion engine E. Specifically, the low pressure pump 21 may pressurize the liquefied gas to be suitable for a suction pressure (e.g., 20 bars) of the high pressure pump 22 disposed downstream of the low pressure pump 21. That is, the low pressure pump 21 increases the pressure of the liquefied gas by a difference pressure between an internal pressure of the fuel tank 12 and the suction pressure of the high pressure pump 22.

However, when a storage pressure of the fuel tank 12 corresponds to the suction pressure of the high pressure pump 22, the low pressure pump 21 may be omitted.

A liquefied gas return line (not shown) may be provided downstream of the low pressure pump 21 on the liquefied gas supply line L20. When a flow volume transferred to the propulsion engine E through the low pressure pump 21 exceeds a required flow volume of the propulsion engine E, the liquefied gas return line may function to collect surplus liquefied gas in the fuel tank 12.

Alternatively, the liquefied gas return line allows the liquefied gas which is discharged from the fuel tank 12 and then is pressurized by the low pressure pump 21 to be reintroduced into the fuel tank 12, so that a function of increasing the internal pressure of the fuel tank 12 can be implemented. Thus, the fuel tank 12 maintains the internal pressure to become high, thereby minimizing occurrence of boil-off gas in the fuel tank 12.

The high pressure pump 22 pressurizes the liquefied gas of the fuel tank 12, corresponding to the required pressure of the propulsion engine E, and transfers the pressurized liquefied gas to the propulsion engine E. The required pressure of the propulsion engine E may be 20 to 50 bars, but be changed according to resources of the propulsion engine E.

The high pressure pump 22 is provided on the liquefied gas supply line L20 extending from the fuel tank 12 to the propulsion engine E. The type of the high pressure pump 22 is not particularly limited, and a plurality of high pressure pumps 22 may be provided in parallel to back up each other as shown in the drawing.

The high pressure pump 22 may be provided upstream of the heat exchanger 23 which will be described later as shown in the drawing, or be provided downstream of the heat exchanger 23, unlike the drawing. In the latter case, the high pressure pump 22 may pressurize the liquefied gas of which temperature is adjusted by the heat exchanger 23 to a pressure which the propulsion engine E requires.

In order to suppress occurrence of cavitation in a liquefied gas pressurization process, the liquefied gas may be introduced in a liquid phase into the high pressure pump 22. When the heat exchanger 23 is provided upstream of the high pressure pump 22, the heat exchanger may control the temperature of the liquefied gas by considering the above-described items.

A pressure of the liquefied gas sucked into the high pressure pump 22 may correspond to a pressure of the liquefied gas discharged by the low pressure pump 21. Also, the pressure of the liquefied gas sucked into the high pressure pump 22 may also correspond to a pressure of the liquefied gas collected in the propulsion engine E.

A filter (reference numeral not shown) for filtering an impurity may be provided downstream of the high pressure pump 22. The filter may be additionally provided upstream of the low pressure pump 21, or the like as shown in the drawing.

In addition, a fuel supply valve (not shown) may be provided downstream of the high pressure pump 22 on the liquefied gas supply line L20. The fuel supply valve and a decompression valve (not shown) provided on a liquefied gas collection line L30 may be configured as one train to be designated as a FVT (fuel valve train).

A liquefied gas circulation line L22 connected to the liquefied gas collection line L30 of the fuel collection part 40 which will be described later may be provided on the liquefied supply line L20 downstream of the high pressure pump 22. The liquefied gas discharged from the high pressure pump 22 is transferred to the liquefied gas collection line L30 along the liquefied gas circulation line L22, to be again circulated to the high pressure pump 22.

A minimum required flow volume of the high pressure pump 22 is set for the purpose of operational stability, and the like. This is referred to as minimum flow, and the liquefied gas satisfying the minimum required flow volume may be preferably introduced into the high pressure pump 22 in an operation.

However, there is a case where a consumption volume in the propulsion engine E downstream of the high pressure 22, and the like does not satisfy the minimum required flow volume. In an example, there is a case where the propulsion engine E is operated with a low load, or the operation is stopped in a situation in which the high pressure pump 22 is under operation, or the like.

In this embodiment, in order to stably operate the high pressure pump 22, the liquefied gas may be circulated such that the liquefied gas having the minimum required flow volume or more is introduced into the high pressure pump 22 even when the required flow volume of the propulsion engine E is short of the minimum required flow volume of the high pressure pump 22.

That is, when the minimum required flow volume of the high pressure pump 22 is 100 and the required flow volume of the propulsion engine E is 80, the liquefied gas of 20 may be circulated to the high pressure pump 22 via the liquefied gas circulation line L22 and the liquefied gas collection line L30 downstream of the high pressure pump 22.

Thus, when the required flow volume of the propulsion engine E is equal to or smaller than the minimum required flow volume of the high pressure pump 22, the liquefied gas circulation line L22 circulates the liquefied gas having a flow volume or more except the required flow volume of the propulsion engine E with respect to the minimum required flow volume of the high pressure pump 22, thereby guaranteeing the minimum required flow volume of the high pressure pump 22.

The heat exchanger 23 is provided downstream of the low pressure pump 21 to change the temperature of the liquefied gas. The heat exchanger 23 may increase or decrease the temperature of the liquefied gas. Therefore, the heat exchanger 23 may be designated as a fuel conditioner.

In an example, in an initial operation of this embodiment, the flow volume of high temperature liquefied gas is large, and hence the heat exchanger 23 may decrease the temperature of the liquefied gas. In a stable operation, the heat exchanger 23 may increase the temperature of the liquefied gas.

The heat exchanger 23 may be provided downstream of the high pressure pump 22 as shown in the drawing. Unlike the drawing, the heat exchanger 23 may be provided upstream of the high pressure pump 23. In the latter case, the heat exchanger 23 may control the temperature of the liquefied gas to be equal to or lower than the boiling point of the liquefied gas such that gaseous liquefied gas is not introduced into the high pressure pump 22.

The heat exchanger 23 may implement heat exchange with the liquefied gas by using various heat exchange media. In an example, the heat exchange media may be seawater, purified water, glycol water, exhaust, and the like, but the present invention is not limited thereto.

The reliquefaction part 30 liquefies boil-off gas generated in the cargo tank 10. The reliquefaction part 30 may be configured as a module in which several components are disposed on one skid to constitute a reliquefaction apparatus. The reliquefaction part 30 may include a plurality of reliquefaction apparatuses. However, for convenience, one reliquefaction apparatus is illustrated in the drawing.

The reliquefaction apparatus includes the compressor 31, the condenser 32, a gas-liquid separator 33, an intercooler 34, and an aftercooler 35. The compressor 31, the aftercooler 35, the condenser 32, and the gas-liquid separator 33 may be sequentially disposed in series on the boil-off discharge line L10, and the intercooler 34 may be provided on a boil-off gas return line L11 connected from the gas-liquid separator 33 to the cargo tank 10.

The compressor 31 compresses the boil-off gas discharged from the cargo tank 10. The compressor 31 may allow the boiling point of the boil-off gas to be increased by compression, and accordingly, the liquefaction efficiency in the condenser 32 described below can be improved.

The compressor 31 may be configured in multiple stages, and be provided in three stages as shown in the drawing or be provided in various stages. Also, the compressor 31 may be provided in parallel on the boil-off gas discharge line L10 to back up each other.

The compressor 31 may transfer the compressed boil-off gas to the condenser 32 such that the compressed boil-off gas is liquefied, or transfer the compressed boil-off gas to the fuel tank 12 filled with an appropriate volume of liquefied gas. In the former case, the boil-off gas liquefied in the condenser 32 may be supplied to the fuel tank 12. In the latter case, the high-pressure boil-off gas may be directly injected into the fuel tank 12 and be cooled and liquefied by the liquefied gas in the fuel tank 12.

A drum (not shown) may be provided upstream of the compressor 31. The drum is a gas-liquid separation component for filtering droplets in the boil-off gas discharged from the cargo tank 10, and the droplets may be provided to be returned to the cargo tank 10.

The drum allows any droplets not to be introduced into the compressor 31, thereby protecting the compressor 31. The drum may be omitted according to a type of the compressor 31.

The condenser 32 liquefies the boil-off gas generated in the cargo tank 10. The liquefaction of the boil-off gas may use a refrigerant, and the refrigerant may be glycol water, nitrogen, seawater, or the like. However, hereinafter, in this specification, it is assumed and described that the refrigerant of the condenser 32 is seawater.

The condenser 32 may have two stream structures including a boil-off gas stream along which the boil-off gas compressed in the compressor 31 is introduced thereinto and a refrigerant stream along which a refrigerant for performing heat exchange with the boil-off gas flows.

The type of the condenser 32 is not limited, such as Shell & Tube or PCHE, and a bath type where boil-off gas in a housing having a refrigerant stored therein passes to perform heat exchange.

The cargo tank 10 may be provided in plurality to respectively store at least two kinds of liquefied gases as described above, and the condenser 32 may be provided to liquefy all of different kinds of boil-off gases.

When a plurality of cargo tanks 10 for storing different kinds of liquefied gases are provided, a plurality of condensers 32 may be provided corresponding to kinds of liquefied gases. Alternatively, as described above, in this embodiment, different kinds of boil-off gases are integrally transferred to one condenser 32, thereby decreasing the installation number (or operation number) of condensers 32.

This is because an operation (fuel supply mode) in which the reliquefaction apparatus of this embodiment transfers the liquefied boil-off gas to the fuel tank 12 instead of the cargo tank 10 to be consumed in the propulsion engine E is possible.

When any composition pollution in the cargo tank 10 does not occur even though the boil-off gas liquefied in the condenser 32 is returned to the cargo tank 10, the reliquefaction apparatus may be operated in a reliquefaction mode in which the liquefied boil-off gas is transferred to the cargo tank 10.

The gas-liquid separator 33 stores the boil-off gas liquefied in the condenser 32. The gas-liquid separator 33 may have a container shape, a shape in which a tube partially extend, or the like to have a function of a buffer.

The gas-liquid separator 33 may separate the liquefied boil-off gas into a gaseous phase and a liquid phase and then transfer the liquid phase to the cargo tank 10, the fuel tank 12, or the like. The gas-liquid separator 33 may transfer only the liquid phase to the cargo tank 10 or the like, accommodate the gaseous phase thereinside. The gas-liquid separator 33 maintains an internal pressure to a certain level, so that liquefaction of the boil-off gas can be prevented.

As described above, the reliquefaction apparatus may be operated in the fuel supply mode in which the liquefied boil-off gas is transferred to the fuel tank 12 instead of the cargo tank 10 so as to prevent composition mixture of the liquefied gas (or to supply the boil-off gas to the propulsion engine E). To this end, the gas-liquid separator 33 may be provided with a boil-off gas transfer line L12 for transferring the liquid phase to the fuel tank 12.

Alternatively, in order for the reliquefaction apparatus to be operated in the reliquefaction mode, the boil-off gas return line L11 may be provided toward the cargo tank 10 from the gas-liquid separator 33, and the intercooler 34 may be provided on the boil-off gas return line L11.

Therefore, the reliquefaction apparatus may be operated in at least one of the reliquefaction mode in which the liquid phase separated in the gas-liquid separator 33 is transferred to the cargo tank 10 via the intercooler 34 and/or the fuel supply mode in which the liquid phase separated in the gas-liquid separator 33 is transferred to the fuel tank 12 to be supplied to the propulsion engine E.

That is, the reliquefaction apparatus may be operated in a mode obtained by combining the reliquefaction mode and the fuel supply mode. In the combination mode, a portion of is transferred to the cargo tank 10, and the other of the liquid phase separated in the gas-liquid separator 33 is transferred to the fuel tank 12. The flow volume of the liquid phase branching off to the fuel tank 12 may be controlled according to a load of the propulsion engine E.

The intercooler 34 heat-exchanges a portion and the other of the boil-off gas liquefied in the condenser 32 with each other, and transfers, to the compressor 31, a gaseous boil-off gas generated by the heat exchange in the boil-off gas introduced from the condenser 32.

The intercooler 34 is used to cool the boil-off gas in a middle stage of the compressor 31 configured in multiple stages. When the boil-off gas is compressed by the compressor 31, the temperature of the boil-off gas is increased due to compression heat. In this case, there is a problem that a load of the compressor 31 increases. Therefore, in this embodiment, the intercooler 34 may be used for middle cooling.

Specifically, the intercooler 34 is provided in a container shape for storing a portion of the boil-off gas liquefied in the condenser 32, and the boil-off gas stored inside the intercooler 34 is used as a refrigerant for cooling the other (flow volume transferred to the cargo tank 10) of the boil-off gas liquefied in the condenser 32.

To this end, the boil-off gas return line L11 branches off upstream of the intercooler 34. One side of the boil-off gas return line L11 transfers the boil-off gas into the intercooler 34, and the other side of the boil-off gas return line L11 is connected to the cargo tank 10 via the inside of the intercooler 34 to perform heat exchange with the boil-off gas stored in the intercooler 34.

That is, the intercooler 34 may sufficiently liquefy the boil-off gas transferred to the cargo tank 10 by heat-exchanging the boil-off gas transferred from the condenser 32 to the cargo tank 10 with the boil-off gas which is transferred from the condenser and then stored thereinside.

A portion of the boil-off gas return line L11, which passes through the inside of the intercooler 34, may be provided in a coil shape so as to improve heat exchange efficiency. In addition, a decompression valve (reference numeral not shown) may be provided at a portion of the boil-off gas return line L11, which transfers the boil-off gas to the inside of the intercooler 34.

Also, the intercooler 34 may transfer a gaseous phase in the boil-off gas stored thereinside to a middle stage of the compressor 31. The gaseous boil-off gas transferred to the middle stage of the compressor 31 is in an extremely low temperature state close to the boiling point. Therefore, the boil-off gas in the middle stage of the compressor 31 may be cooled while being mixed with the gaseous boil-off gas transferred from the intercooler 34.

The intercooler 34 may be allocated to each middle stage of the compressor 32 configured in multiple stages. However, since the boil-off gas is circulated by the intercooler 34, a boil-off gas volume which may be introduced from the cargo tank 10 to the reliquefaction apparatus may be limited due to a boil-off gas volume transferred from the intercooler 34 to the middle stage of the compressor 31.

That is , the reliquefaction apparatus has a reliquefaction volume obtained by subtracting the boil-off gas volume transferred to the middle stage of the compressor 31 by the intercooler 34 from an introduction allow volume of a first stage of the compressor 31. In an example, when the introduction allow volume of the first stage of the compressor 31 is 800, a boil-off gas volume of 200 is circulated in a middle stage (between first and second stages and between second and third stages) of the compressor 31 by the intercooler 34. Finally, the boil-off gas volume which the reliquefaction apparatus can receive from the cargo tank 10 is decreased to 400.

In order to solve this, in this embodiment, the intercooler 34 is allocated to only some of middle stages of the compressor 31, and the aftercooler 35 instead of the intercooler 34 is provided to the others of the middle stages of the compressor 31, so that the volume of the reliquefaction apparatus can be increased.

The intercooler 34 may be replaced with a separator. Similarly to the gas-liquid separator 33 described above, the separator may separate the boil-off gas liquefied in the condenser 32 into a gaseous phase and a liquid phase. The separator may transfer the liquid phase to the cargo tank 10, and transfer the gaseous phase to the middle stage of the compressor 31. In this case, the separator simply separates the boil-off gas into the gaseous phase and the liquid phase, and does not implement heat exchange between boil-off gases. Therefore, the boil-off gas return line L11 having a coil shape may be omitted inside the separator.

The aftercooler 35 may be provided in some of the middle stages of the compressor 31 and cool the boil-off gas by using a separate refrigerant. The aftercooler 35 may implement a function of a precooler from the viewpoint of the condenser 32.

Similarly to the condenser 32, the aftercooler 35 may use a refrigerant such as seawater. In addition, the aftercooler 35 may use various refrigerants. However, the aftercooler 35 may use a separate refrigerant supplied from the outside instead of the liquefied gas stored in the cargo tank 10 or the boil-off gas discharged from the cargo tank 10.

When describing with reference to the drawing, in this embodiment, the gaseous boil-off gas may be circulated by connecting the intercooler 34 between the first and second stages of the compressor 31, and the aftercooler 35 may be provided between the second and third stages of the compressor 31.

When the introduction allow volume of the first stage of the compressor 31 is 800 and the circulation of the intercooler 34 is made by a boil-off gas volume of 200, in this embodiment, a boil-off gas volume of 600 is allowed to be transferred from the cargo tank 10 to the reliquefaction apparatus.

That is, in this embodiment, as compared with when the reliquefaction apparatus connects the intercooler 34 to each middle stage of the compressor 31, at least one intercooler 34 is replaced with the aftercooler 35, thereby increasing the reliquefaction volume.

The reliquefaction part 30 of this embodiment may be operated in two modes. In an example, the reliquefaction part 30 may be operated in a reliquefaction mode in which the boil-off gas liquefied in the condenser 32 is transferred to the cargo tank 10 via the intercooler 34 and a fuel supply mode in which the boil-off gas is transferred toward the propulsion engine E upstream or downstream of the condenser 32.

Specifically, in the reliquefaction mode, the multi-stage compressed boil-off gas is liquefied via the condenser 32, and then is transferred to the intercooler 34 while passing through the gas-liquid separator 33. The boil-off gas branches off upstream of the intercooler 34. A portion of the boil-off gas may be filled inside the intercooler 34, and the other of the boil-off gas is not mixed with the boil-off gas filled inside the intercooler 34 but may pass through the inside of the intercooler 34 to perform only heat exchange. The boil-off gas passing through the intercooler 34 may be cooled or supercooled to stably maintain a liquid phase, and then be returned to the cargo tank 10.

On the other hand, in the fuel supply mode, the multi-stage compressed boil-off gas may be transferred to the fuel tank 12 upstream of the condenser 32. Alternatively, the multi-stage compressed and condensed boil-off gas may be transferred to the fuel tank 12 to be transferred to the propulsion engine E by the high pressure pump 22.

The fuel supply mode may be made when it is not preferable that the liquefied boil-off gas is returned to the cargo tank 10, when only the liquefied gas stored in the fuel tank 12 does not satisfy a required flow volume of the propulsion engine E since the load of the propulsion engine E is high, or the like.

In an example, when propane and butane are stored in the cargo tank 10, the butane may be liquefied by using another reliquefaction apparatus for treating propane, when an operation of a reliquefaction apparatus for treating butane is stopped due to occurrence of a problem. Propane remaining in the reliquefaction apparatus for treating propane may be mixed with butane, and therefore, the fuel supply mode may be made, in which liquefied butane is not transferred to the cargo tank 10 but transferred to the fuel tank 12.

In addition, in various situations in which transfer to the fuel tank 12 or the like is more preferable than transfer to the cargo tank 10, the fuel supply mode may be made instead of the reliquefaction mode. Also, it will be apparent that a combination mode obtained by combining the reliquefaction mode and the fuel supply mode may be made as described above.

The fuel collection part 40 collects liquid liquefied gas discharged from the propulsion engine E. The fuel collection part 40 may collect the liquid liquefied gas upstream of the high pressure pump 22. To this end, the liquefied gas collection line L30 is provided from the propulsion engine E to the liquefied gas supply line L20 upstream of the high pressure pump 22.

Unlike commercial engines (ME-GI, XDF, and the like) supplied with LNG in a gaseous phase to be consumed, the propulsion engine E (ME-LGI or the like) in the present invention has a structure which discharges surplus liquid fuel while being supplied with LPG or the like in a liquid phase to be consumed.

This is because, unlike the gaseous phase, it is not easy to finely control a fuel supply volume in the liquid phase, and therefore, surplus fuel is generated as the propulsion engine E is supplied with a sufficient volume of liquid fuel.

However, liquefied gas collected in the propulsion engine E is not liquefied gas before being introduced into the propulsion engine E but **liquefied** gas passing through the inside of the propulsion engine E, and is in a state having a temperature/pressure corresponding to the required pressure of the propulsion engine E (e.g., 45 bars or so and 50 °C or higher). A lubricant used in the propulsion engine E may be mixed inside the liquefied gas.

That is, since the lubricant is mixed with the surplus liquefied gas collected from the propulsion engine E, it is preferable that the collected liquefied gas is not transferred to the cargo tank 10 so as to prevent cargo pollution.

Therefore, the liquefied gas collection line L30 connected to the propulsion engine E to collect surplus liquefied gas may transfer surplus liquefied gas returned from the propulsion engine E to the high pressure pump 22 instead of the cargo tank 10, thereby allowing the surplus liquefied gas to be reintroduced into the propulsion engine E.

That is, the liquefied gas collection line L30 transfers the surplus liquid liquefied gas mixed with the lubricant used in the propulsion engine E while passing through the inside of the propulsion engine E to the liquefied gas supply line L30 upstream of the high pressure pump 22, thereby allowing the surplus liquid liquefied gas to be reintroduced into the propulsion engine E. Accordingly, the liquefied gas in the cargo tank 10 can be prevented from being polluted due to the lubricant.

The fuel collection part 40 includes a decompression valve provided on the liquefied gas collection line L30 and a cooler 41, and may further include a capture tank 42 and a knockout drum 43.

The decompression valve decompresses the surplus liquid liquefied gas which is discharged from the propulsion engine E and is mixed with the lubricant. The decompression valve may be a Joule-Thomson valve. The decompression valve along with the fuel supply valve may constitute a fuel valve train (FVT).

The decompression valve may decompress liquefied gas having a high pressure (about 30 to 50 bars), which is collected in the propulsion engine E, thereby adjusting the pressure of the liquefied gas to the suction pressure of the high pressure pump 22.

The cooler 41 cools the liquefied gas decompressed by the decompression valve on the liquefied gas collection line L30 to allow the liquefied gas in a liquid phase to be introduced into the high pressure pump 22. The cooler 41 may use various refrigerants which are not limited, and cool the liquefied gas to be equal to or lower than the boiling point of the decompressed liquefied gas. In an example, the cooler 41 may use seawater as a refrigerant. The heat exchanger 23 and the cooler 41 may be integrally connected by one refrigerant supply part.

Cooling of the cooler 41 may be made by considering mixture with the liquefied gas transferred from the fuel tank 12 to the high pressure tank 22. Therefore, the cooler 41 may cool the liquefied gas at a temperature slightly higher than the boiling point of the decompressed liquefied gas.

The liquefied gas in the liquid phase (or in a state close to the liquid phase), which is cooled by the cooler 41, is mixed upstream of the high pressure pump 22 in a liquefied gas supply line L20 through the liquefied gas collection line L30, and a mixer (not shown) may be provided at a point at which the liquefied gas collection line L30 is connected to the liquefied gas supply line L20.

The above-described liquefied gas circulation line L22 may branch off from the liquefied gas supply line L20 downstream of the high pressure pump 22 and be connected upstream of the cooler 41 from the liquefied gas collection line 30, to be connected between the propulsion engine E and the cooler 41 downstream of the high pressure pump 22.

The liquefied gas is pumped and heated due to the operation of the high pressure pump 22. When the heated liquefied gas is continuously circulated, the temperature of the high pressure pump 22 may be unnecessarily increased. Hence, this is for the purpose of suppressing the increase in temperature of the high pressure pump 22. That is, in this embodiment, the degree of heat generation of the high pressure pump 22 when the liquefied gas is circulated through the liquefied gas circulation line L22 may be limited to a predetermined value or less by using the cooler 41.

Thus, the high pressure pump 22 can continuously pump liquefied gas of a minimum required flow volume or more, and surplus liquefied gas collected by the liquefied gas circulation line L22 is circulated to the high pressure pump 22 via the cooler 41. Accordingly, rupture of the high pressure pump 22 can be prevented.

The capture tank 42 captures a portion of the liquefied gas returned from the propulsion engine E. The capture tank 42 may be provided to branch off from the liquefied gas collection line L30 connected from the propulsion engine E to the liquefied gas supply line L20 upstream of the high pressure pump 22, and a liquefied gas capture line L31 may extend from the liquefied gas collection line L30 to the capture tank 42.

The liquefied gas capture line L31 may extend from between the decompression valve and the cooler 41 on the liquefied gas collection line L3 to be connected to the capture tank 42, and join with the liquefied gas collection line L30 upstream of the cooler 41 from the capture tank 42. That is, the liquefied gas capture line L31 may be partially provided in parallel to the liquefied gas collection line L30, and be provided such that the capture tank 43 is provided thereon.

The capture tank 42 separates the collected liquefied gas into a gaseous phase and a liquid phase. When gaseous liquefied gas is introduced into the high pressure pump 22, a cavitation problem may occur. Therefore, in the present invention, the liquefied gas flowing along the liquefied gas collection line L30 is separated into the gas phase and the liquid phase while passing through the capture tank 42, if necessary, so that introduction of the gaseous liquefied gas into the high pressure pump 22 can be blocked.

That is, the capture tank 42 transfers only liquid liquefied gas to the high pressure pump 22 by capturing the liquefied gas of the liquefied gas collection line L30, so that a stable operation of the high pressure pump 22 can be ensured.

The knockout drum 43 may receive liquefied gas collected in the propulsion engine E from the capture tank 42, to filter an impurity (lubricant or the like) included in the liquefied gas. A liquefied gas treatment line L32 may be connected from the capture tank 42 to the knockout drum 43. The liquefied gas treatment line L32 may transfer, to the knockout drum 43, the liquid liquefied gas transferred from the capture tank 42 to the liquefied gas collection line L30, in addition to the gaseous liquefied gas separated in the capture tank 42.

The knockout drum 42 separates lubricant from the liquefied gas introduced thereinto. Specifically, the knockout drum 43 discharges the liquefied gas in the phase state and discharges the lubricant in the liquid phase. That is, the knockout drum 43 implements a gas-liquid separation function, similarly to the capture tank 42.

However, a heating part such as tracing may be used to accelerate evaporation of the liquefied gas, and the tracing may be a component which uses, as a heat sources, a medium such as steam or seawater or component which performs heating by using electricity.

The knockout drum 43 heats liquefied gas mixed with lubricant. The liquefied gas may be discharged to a vent mast (not shown), and the lubricant may be treated (recycled) by being drained at a lower portion.

For reference, the vent mast (not shown) discharges, in the air, a material to be vented to the outside between the cargo tank 10 and the propulsion engine E. The vent mast may be provided on a deck in the ship and have a constant height to protect crewmen on the deck.

It will be apparent that the vent mast may be connected from the capture tank 42 or the knockout drum 43. The vent mast may also be connected to the boil-off gas discharge line L10, the liquefied gas supply line L20, the fuel tank 12, and the like. Accordingly, the vent mast implements external discharge in an emergency situation such as a normal operation or suspension of an operation of the propulsion engine E.

Also, the vent mast may discharge, to the outside, purging gas in purging of the boil-off gas discharge line L10, the liquefied gas supply line L20, and the like. The purging gas may be nitrogen gas, inert gas, or the like.

As described above, in this embodiment, boil-off gas generated in the cargo tank 10 is reliquefied and then transferred to the fuel tank 12, to be supplied to the propulsion engine E. Thus, when different kinds of liquefied gases are reliquefied and then returned to the cargo tank 10, a problem that liquefied gas compositions may be polluted can be solved, and the number of condensers 32 installed or operated can be decreased.

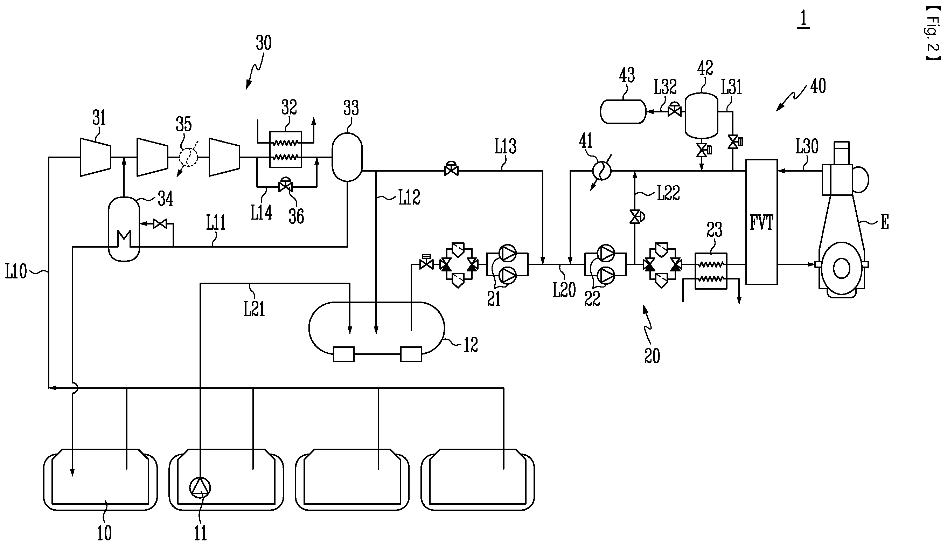

FIG. 2 is a conceptual view illustrating a gas treatment system in accordance with a second embodiment of the present invention.

Hereinafter, in this embodiment, portions different from those of the above-described embodiment will be mainly described, and portions which will not be described below are the same as those of the above-described embodiment. This will be the same as other embodiments which will be described later.

Referring to FIG. 2, in the gas treatment system 1 in accordance with the second embodiment of the present invention, the reliquefaction part 30 liquefies boil-off gas and transfers the liquefied boil-off gas to the high pressure pump 22. Specifically, like the above-described embodiment, the reliquefaction apparatus the liquefied boil-off gas may transfer to the fuel tank 12 or transfer the liquefied boil-off gas to the liquefied gas supply line L20 between the fuel tank 12 and the high pressure pump 22.

To this end, in addition to the boil-off gas return line L11 and the boil-off gas transfer line L12, a boil-off gas supply line L13 may be provided as a line for transferring a liquid phase separated in the gas-liquid separator 33. One end of the boil-off gas supply line L13 may extend from the gas-liquid separator 33 or the boil-off gas transfer line L12, and the other end of the boil-off gas supply line L13 may be connected between the high pressure pump 22 and the low pressure pump 21 on the liquefied gas supply line L20.

A point at which the boil-off gas transfer line L12 is connected to the liquefied gas supply line L20 may be upstream of a point at which the liquefied gas collection line L30 is connected to the liquefied gas supply line L20 or the same point as the point at which the liquefied gas collection line L30 is connected to the liquefied gas supply line L20. Therefore, the high pressure pump 22 may pressurize liquid boil-off gas transferred from the reliquefaction apparatus in addition to liquefied gas supplied from the low pressure pump and surplus liquefied gas collected through the liquefied gas collection line L30, and supply the pressurized gas to the propulsion engine E.

When boil-off gas liquefied in the condenser 32 is joined with the liquefied gas collected in the liquefied gas collection line L30 while bypassing the fuel tank 12 through the boil-off gas supply line L13 and then is supplied to the high pressure pump 22, introduction of gas into the high pressure pump 22 can be still prevented.

Specifically, in this embodiment, an introduction pressure of the high pressure pump 22 and a boil-off gas pressure (may be an internal pressure of the gas-liquid separator 33) downstream of the condenser 32 are controlled equal to each other, so that a boiling point of the liquefied gas flowing in the liquefied gas supply line L20 upstream of the high pressure pump 22 and a boiling point of the boil-off gas flowing in the boil-off gas supply line L13 formed equal to each other. That is, any separate pressurization/compression means is not provided on the boil-off supply line L13 between the gas-liquid separator 33 and the high pressure pump 22.

However, the introduction pressure of the high pressure pump 22 is equal to a pressure downstream of the decompressor valve on the liquefied gas collection line L30. That is, a boiling point of liquid liquefied gas flowing in the liquefied gas collection line L30 also becomes equal to the boiling point of the boil-off gas on the boil-off gas supply line L13.

The condenser 32 of the reliquefaction apparatus and the cooler 41 on the liquefied gas collection line L30 may use the same refrigerant. That is, a refrigerant having the same condition (temperature) is supplied to the condenser 32 and the cooler 41, so that cooling of the boil-off gas/the liquid liquefied gas is implemented at the approximately same temperature.

Thus, in this embodiment, while the cooler 41 of the fuel collection part 40 cools liquid liquefied gas having a first pressure by using a first refrigerant to prevent boil-off at an introduction end of the high pressure pump 22, the condenser of the reliquefaction part 30 also cools boil-off gas having the first pressure by using the first refrigerant. Accordingly, the cooler 41 and the condenser 32 can be controlled while mutually contacting each other such that any gas is not introduced into the high pressure pump 22.

That is, in this embodiment, although the introduction pressure of the high pressure pump 22 is low, the condenser 32 condenses boil-off gas by using the same refrigerant as the cooler 41 with respect to the same pressure as the liquid liquefied gas collected in the fuel collection part 40. Thus, although the reliquefaction apparatus directly transfers boil-off gas to the high pressure pump 22 while bypassing the fuel tank 12, the operation stability of the high pressure pump 22 can be ensured.

Therefore, when the reliquefaction apparatus of this embodiment is operated in the fuel supply mode, the reliquefaction apparatus may not only transfer a liquid phase separated in the gas-liquid separator 33 to the fuel tank 12 but also transfer the liquid phase to the liquefied gas supply line L20 upstream of the high pressure pump 22, to be supplied to the propulsion engine E. The control of flow into the boil-off gas transfer line L12 or the boil-off gas supply line L13 may be controlled according to various variables including a boil-off gas volume discharged from the cargo tank 10, a load of the propulsion engine E, an internal pressure of the fuel tank 12, and the like.

Also, the reliquefaction apparatus of this embodiment includes a bypass line L14. The bypass line L14 allows at least a portion of boil-off gas to be supplied to the gas-liquid separator 33 while bypassing the condenser 32, and a bypass valve 36 for flow control may be provided on the bypass line L14.

When the temperature of a refrigerant used by the condenser 32 is low temperature, boil-off gas may be overcooled by the refrigerant. When the overcooled liquid boil-off gas is introduced into the gas-liquid separator 33 downstream of the condenser 32, a drop of internal pressure of the gas-liquid separator 33 may be caused.

That is, the temperature of the refrigerant in the condenser 32 may determine a cooling degree of the boil-off gas, which determines an internal pressure in the gas-liquid separator 33. The internal pressure of the gas-liquid separator 33 may be the pressure of boil-off gas transferred to the high pressure pump through the boil-off gas supply line L13. When the internal pressure of the gas-liquid separator 33 is low, evaporation of the boil-off gas in the high pressure pump 22 may be caused as the boiling point of the boil-off gas becomes low.

Therefore, the temperature of the refrigerant of the condenser 32 may result in a problem of evaporation at the introduction end of the high pressure pump 22. Hence, in this embodiment, control of increasing the pressure of the gas-liquid separator 33 according to the temperature of the refrigerant may be implemented.

To this end, the bypass line L14 may allow at least a portion of the boil-off gas to be supplied to the gas-liquid separator 33 while bypassing the condenser 32 through opening of the bypass valve 36 so as to prepare for fluctuation of the pressure of boil-off gas transferred from the gas-liquid separator 33 to the high pressure pump 22 according to the temperature of the refrigerant.

When high-temperature, gaseous boil-off gas bypassing the condenser 32 is introduced into the gas-liquid separator 33, the internal pressure of the gas-liquid separator 33 is increased, and hence the pressure of liquid boil-off gas transferred from the gas-liquid separator 33 to the liquefied gas supply line L20 through the boil-off gas supply line L13 is increased. Therefore, the boiling point becomes high.

Thus, in this embodiment, the liquid boil-off gas transferred from the reliquefaction apparatus to the high pressure pump 22 is prevented from being again evaporated through control of adjusting whether to bypass the condenser 32 by using the temperature of the refrigerant as a variable, so that a cavitation phenomenon in the high pressure pump 22 can be prevented in advance.

In addition, as the internal pressure of the gas-liquid separator 33 is controlled to correspond to the pressure of the liquid liquefied gas collected in the liquefied gas collection line L30, only the liquid phase can be stably introduced into the introduction end of the high pressure pump 22 while the condenser 32 and the cooler 41 are operated by using the same refrigerant as described above.

As described above, when the temperature of the refrigerant used in the condenser 32 is a low temperature, the pressure of the liquid boil-off gas transferred from the reliquefaction apparatus to the high pressure pump 22 is low. Therefore, the liquid boil-off gas may be evaporated and then introduced into the high pressure pump 22. Hence, in this embodiment, control of allowing a portion of the boil-off gas to bypass the condenser 32 according to the temperature of the refrigerant is applied, thereby effectively solve the above-described problem.

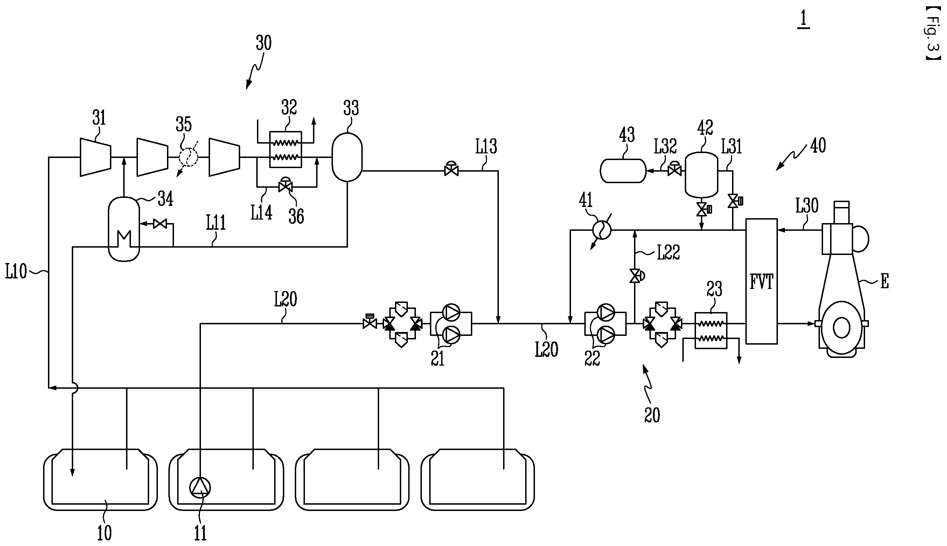

FIG. 3 is a conceptual view illustrating a gas treatment system that does not form an embodiment of the present invention.

Referring to FIG. 3, in the gas treatment system 1, as compared with the above-described second embodiment, the fuel tank 12 may be omitted, and the liquefied gas transfer line L21, the boil-off gas transfer line L12, or the like may also be omitted.

In this case, the liquefied gas supply line L20 may be directly connected from the cargo tank 10 to the propulsion engine E, and the low pressure pump 21, the high pressure pump 22, the heat exchanger 23, and the like may be provided on the liquefied gas supply line L20.

The low pressure pump 21 may be disposed downstream of the transfer pump 11 in the liquefied gas supply line L20 as shown in the drawing. However, when a discharge pressure of the transfer pump 11 is provided to correspond to an introduction pressure of the high pressure pump 22, the low pressure pump 21 may omitted.

In addition, in this embodiment, the reliquefaction apparatus may transfer liquefied boil-off gas to the liquefied gas supply line L20 between the cargo tank 10 and the high pressure pump 22. In the fuel supply mode, the reliquefaction apparatus may transfer a liquid phase separated in the gas-liquid separator 33 to the liquefied gas supply line L20 upstream of the high pressure pump 22 such that the liquid phase is supplied to the propulsion engine E.

Also, like the above-described embodiment, the reliquefaction apparatus liquefies boil-off gas to be transferred to the high pressure pump. A portion of the boil-off gas may bypass the condenser 32 and be transferred to the liquefied gas supply line L20 upstream of the high pressure pump 22 via the gas-liquid separator 33 according to the temperature of a refrigerant.

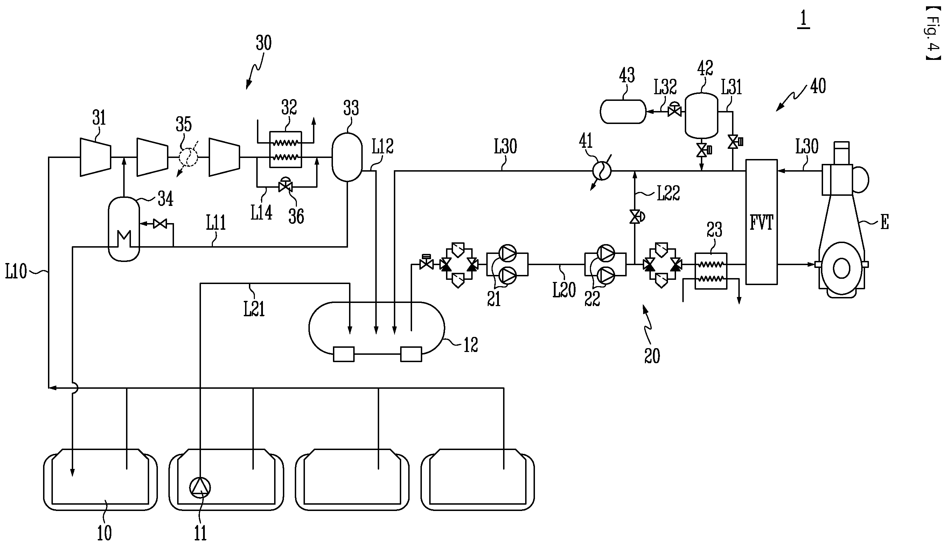

FIG. 4 is a conceptual view illustrating a gas treatment system that does not form an embodiment of the present invention.

Referring to FIG. 4, in the gas treatment system 1, as compared with the above-described second embodiment, the boil-off gas supply line L13 is omitted, and a collection point of liquefied gas is set to the fuel tank 12.

In this embodiment, the reliquefaction apparatus may transfer liquefied boil-off gas to the fuel tank 12. This may be made by the boil-off gas transfer line L12 as described above. That is, in the fuel supply mode, the reliquefaction apparatus may transfer a liquid phase separated in the gas-liquid separator 33 to the fuel tank 12 such that the liquid phase is supplied to the propulsion engine E.

However, in this embodiment, the liquefied gas collection line L30 of the fuel collection part 40 may extend from the propulsion engine E to be connected to the inside the fuel tank 12. Therefore, the liquefied gas collection line L30 may transfer, to the fuel tank 12, surplus liquid liquefied gas mixed with a lubricant used in the propulsion engine E. The liquid liquefied gas introduced into the fuel tank 12 may be reintroduced into the propulsion engine E through the low pressure pump 21 and the high pressure pump 22.

The fuel tank 12 of this embodiment is a component which allows the surplus liquefied gas to be directly collected thereinside, and an internal pressure of the fuel tank 12 may be set high as compared with the above-described second embodiment. That is, the internal pressure of the fuel tank 12 may be adjusted as a pressure at which the collected liquefied gas is not evaporated. In this case, when the internal pressure of the fuel tank 12 corresponds to the introduction pressure of the high pressure pump 22, the low pressure pump 21 may be omitted.

Like the second and third embodiments, in this embodiment, the flow of liquid boil-off gas may be controlled according to the temperature of a refrigerant used in the condenser 32. Specifically, in this embodiment, the reliquefaction apparatus may allow at least a portion of the boil-off gas to be supplied to the fuel tank 12 while bypassing the condenser 32 so as to prepare for fluctuation of the pressure of boil-off gas transferred to the fuel tank 12 according to the temperature of the refrigerant.

In this embodiment, the liquid boil-off gas is transferred to the high pressure pump 22 via the fuel tank 12, and the low pressure pump 21 may be provided between the fuel tank 12 and the high pressure pump 21. Therefore, the temperature of the refrigerant of the condenser 32 has influence on the internal pressure of the fuel tank 12. This may have influence on the introduction pressure of the low pressure pump 21. This may have indirect influence on the introduction pressure of the high pressure pump. When the low pressure pump 21 is omitted, the internal pressure of the fuel tank 12 may have direct influence on the introduction pressure of the high pressure pump 22.

Therefore, the reliquefaction apparatus of this embodiment may allow at least a portion of the boil-off gas to be supplied to the fuel tank 12 via the gas-liquid separator 33 while bypassing the condenser 32 so as to prepare for fluctuation of the pressure of boil-off gas transferred from the gas-liquid separator 33 to the fuel tank 12 according to the temperature of the refrigerant. That is, in this embodiment, the internal pressure of the gas-liquid separator 33 and the internal pressure of the fuel tank 12 may be simultaneously controlled through bypass adjustment of the boil-off gas.

Alternatively, in this embodiment, the liquid boil-off gas liquefied in the condenser 32 is transferred to the high pressure pump 22 via the fuel tank 12, and therefore, the fuel tank 12 may implement a gas-liquid separation function. Hence, the gas-liquid separator 33 in the reliquefaction apparatus may be omitted.

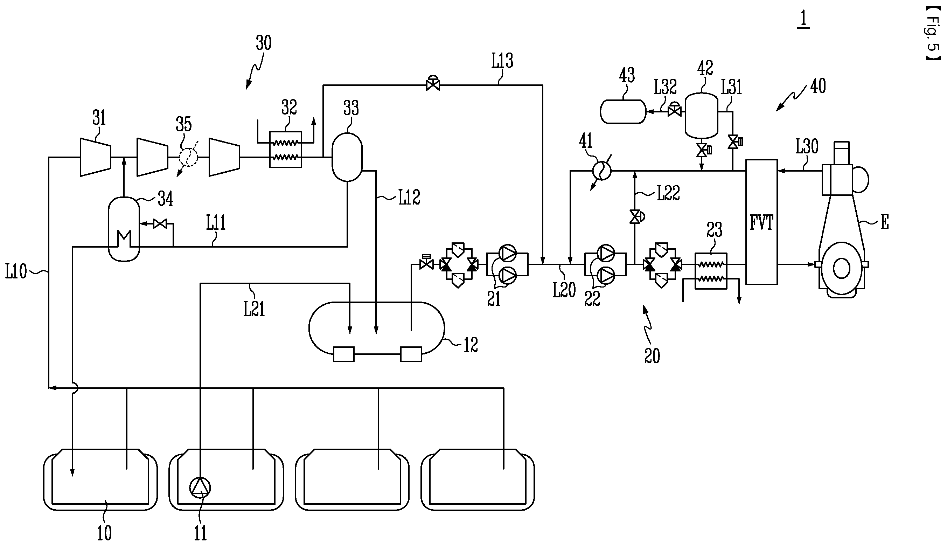

FIG. 5 is a conceptual view illustrating a gas treatment system in accordance with a fifth embodiment of the present invention.

Referring to FIG. 5, in the gas treatment system 1 in accordance with a fifth embodiment of the present invention, as compared with the second embodiment, a connection point of the boil-off gas supply line L13 may be differently provided.

The boil-off gas supply line L13 of this embodiment may transfer boil-off gas upstream of the gas-liquid separator 33 to the liquefied gas supply line L20 between the fuel tank 12 and the high pressure pump 22. That is, one end of the boil-off gas supply line L13 may be connected between the condenser 32 and the gas-liquid separator 33 in the reliquefaction apparatus, and the other end of the boil-off gas supply line L13 may be connected to an upper stream of the high pressure pump 22 in the liquefied gas supply line L20.

The boil-off gas supply line L13 is provided to prepare for fluctuation of the internal pressure of the gas-liquid separator 33 according to the temperature of a refrigerant. Specifically, when the temperature of the refrigerant is a low temperature which is lower than a reference value, the boil-off gas supply line L13 may allow an upper stream of the high pressure pump and an upper stream of the gas-liquid separator 33 to be directly connected to each other so as to prevent pressure from not being sufficient when the boil-off gas is overcooled in the condenser 32 to be introduced into the high pressure pump 22 via the gas-liquid separator 33.

In this case, the compressor 31 of the reliquefaction apparatus is in a situation in which the condenser 32 and the high pressure pump 22 are sequentially disposed downstream of the compressor 31 according to flow of the boil-off gas, and therefore, a pressure of the introduction end of the high pressure pump 22 is matched to a pressure of the discharge end of the compressor 31. Therefore, an operation of the compressor 31 may be controlled while receiving, as resistance, the introduction pressure of the high pressure pump 22 (pressure of liquid liquefied gas collected through the liquefied gas collection line L30), so that the discharge pressure of the compressor 31 is adjusted upwardly.

That is, in this embodiment, when the temperature of the refrigerant used in the condenser 32 is extremely low, the discharge end of the compressor 31 receives resistance due to the introduction pressure of the high pressure pump 22 by allowing a lower stream of the condenser 32 and an upper stream of the high pressure pump 22 to be directly connected to the boil-off gas supply line L13. Therefore, the discharge pressure of the compressor 31 is controlled to correspond to the introduction pressure of the high pressure pump 22.

Thus, in this embodiment, instead of bypassing heat exchange with low-temperature refrigerant, a lower stream of the condenser 32 and an upper stream of the high pressure pump 22 are connected to each other while bypassing the gas-liquid separator 33 to have the same pressure, so that the discharge pressure of the compressor 31 corresponds to the introduction pressure of the high pressure pump 22.

As described above, in this embodiment, the discharge pressure of the compressor 31 corresponds to the introduction pressure of the high pressure pump 22 by allowing a lower stream of the compressor 3 and an upper stream of the high pressure pump 22 to be connected to each other so as to prevent the pressure of the liquid boil-off gas from not be sufficient as the temperature of the refrigerant used in the condenser 32 is extremely low. Thus, evaporation in the high pressure pump 22 can be effectively prevented.

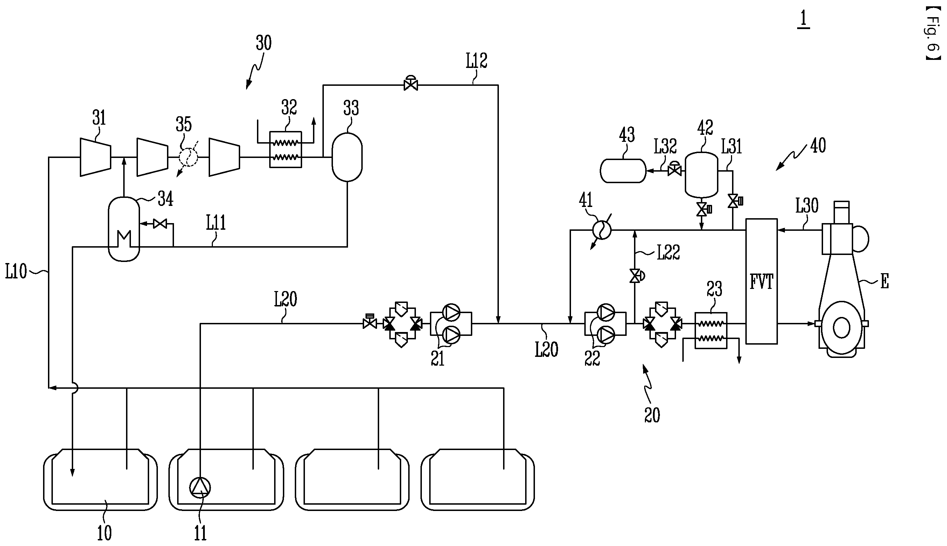

FIG. 6 is a conceptual view illustrating a gas treatment system that does not form an embodiment of the present invention.

Referring to FIG. 6, in the gas treatment system 1, as compared with the fifth embodiment, the fuel tank 12 may be omitted, and the liquefied gas transfer line L21, the boil-off gas transfer line L12, or the like may also be omitted.

In this case, the liquefied gas supply line L20 may be directly connected from the cargo tank 10 to the propulsion engine E, and the low pressure pump 21, the high pressure pump 22, the heat exchanger 23, and the like may be provided on the liquefied supply line L20. The low pressure pump 21 may be omitted, which has been described in the above-described third embodiment.

In this embodiment, the reliquefaction apparatus may transfer liquefied boil-off gas to the liquefied gas supply line L20 between the cargo tank 10 and the high pressure pump 22. In the fuel supply mode, the reliquefaction apparatus may transfer a liquid phase separated in the gas-liquid separator 33 to the liquefied gas supply line L20 upstream of the high pressure pump 22 such that the liquid phase is supplied to the propulsion engine E.

Also, like the above-described embodiment, the reliquefaction apparatus liquefies boil-off gas and transfers the liquefied boil-off gas to the high pressure pump 22. The reliquefaction apparatus allows a lower stream of the condenser 32 and an upper stream of the high pressure pump 22 to be connected to each other according to the temperature of a refrigerant, so that a discharge pressure of the compressor 31 corresponds to an introduction pressure of the high pressure pump 22.

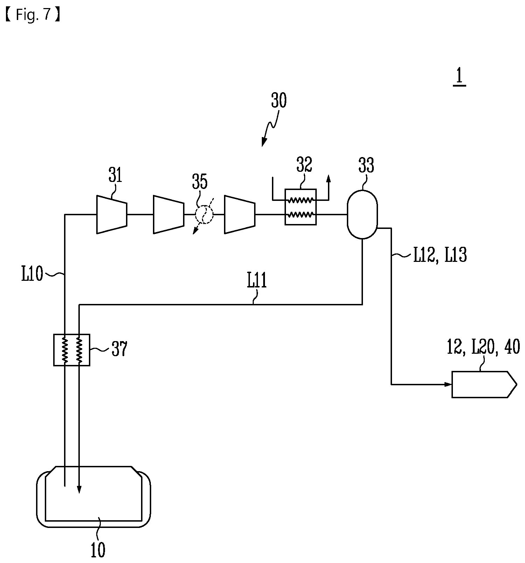

FIG. 7 is a conceptual view illustrating a gas treatment system in accordance with a seventh embodiment of the present invention.

Referring to FIG. 7, in the gas treatment system 1 in accordance with the seventh embodiment of the present invention, as compared with the above-described embodiment, a detailed configuration of the reliquefaction apparatus is changed, and the other components may include components of at least one of the above-described embodiments.

The reliquefaction apparatus of this embodiment includes the compressor 31, the condenser 32, the gas-liquid separator 33, the aftercooler 35, and a boil-off gas heat exchanger 37. The compressor 31, the condenser 32, and the gas-liquid separator 33 have been described above, and therefore, their detailed descriptions will be omitted.

The boil-off gas heat exchanger 37 heat-exchanges boil-off gas transferred from the cargo tank 10 to the compressor 31 with boil-off gas liquefied in the condenser 32. Specifically, the boil-off gas heat exchanger 37 may be provided in 2-stream structure having a stream along which the boil-off gas transferred from the cargo tank 10 to the compressor 31 flows and a stream along which boil-off gas transferred from the gas-liquid separator 33 to the cargo tank 10 flows.

In an example, the boil-off gas heat exchanger 37 may be provided on the boil-off gas return line L11 to have one stream parallel to the boil-off gas discharge line L10 and another stream parallel to the boil-off gas return line L11. The boil-off gas heat exchanger 37 may be provided to substitute for the above-described intercooler 34. It will be apparent that the boil-off gas heat exchanger 37 may be added to the above-described embodiment having the intercooler 34.

Since the boil-off gas liquefied in the condenser 32 is in a state in which the liquefied boil-off gas is compressed in the compressor 31, the temperature of the boil-off gas may be higher than a boiling point at atmospheric pressure even though the boil-off gas is in a liquid phase. On the other hand, boil-off gas discharged from the cargo tank 10 may have a temperature close to the boiling point while having a pressure at an atmospheric pressure level.

Therefore, the heat exchanger 37 may cool the boil-off gas transferred from the gas-liquid separator 33 by heat-exchanging the boil-off gas transferred from the gas-liquid separator 33 with low-temperature boil-off gas discharged from the cargo tank 10. Boil-off gas as a cooling object in the boil-off gas heat exchanger 37 and boil-off gas as a cooling subject in the boil-off gas heat exchanger 37 may have different pressures. A pressure difference may be formed as a pressure difference between an internal pressure in the cargo tank 10 and an internal pressure of the gas-liquid separator 33.

A decompression valve (not shown) may be provided at at least one point in an upper or lower stream of the boil-off gas heat exchanger 37 on the boil-off gas return line L11, so that additional cooling is implemented by decompressing the boil-off gas compressed in the compressor 31.

The reliquefaction apparatus including the boil-off gas heat exchanger 37 may be operated in the fuel supply mode or the reliquefaction mode as described in the above-described first embodiment. That is, the reliquefaction apparatus may be operated in the reliquefaction mode in which the liquid phase separated in the gas-liquid separator 33 is transferred to the cargo tank 10 via the boil-off gas heat exchanger 37 provided on the boil-off gas return line L11, and/or be operated in the fuel supply mode in which the liquid phase separated in the gas-liquid separator 33 is transferred to the fuel tank 12 through the boil-off gas transfer line L12 to be supplied to the propulsion engine E.

As described above, in this embodiment, the boil-off gas heat exchanger 37 is used instead of the intercooler 34, so that the structure of the reliquefaction apparatus can be simplified. In addition, boil-off gas circulation through the intercooler 34 is omitted, so that the reliquefaction volume of the reliquefaction apparatus can be increased.

Although the present invention has been described with reference to exemplary embodiments illustrated in the drawings for illustrative purposes, this is for the purpose of describing and not limiting the invention. Various modifications, which will become apparent to those skilled in the art, are within the scope of this invention described in the attached claims.

All simple modifications or changes of the present invention belong to the scope of the present invention, and the specific protection scope of the present invention will be made clear by the appended claims.

## Claims

1. A gas treatment system for treating liquefied gas as heavier hydrocarbons or ammonia, the gas treatment system comprising:
a propulsion engine (E) of a ship;
a fuel tank (12) storing liquefied gas as a fuel to be supplied to the propulsion engine (E);
a liquefied gas supply line (L20) supplying the liquefied gas of the fuel tank (12) in a liquid phase to the propulsion engine (E), the liquefied gas supply line (L20) having a high pressure pump (22) provided thereon;
a reliquefaction apparatus liquefying boil-off gas generated in a cargo tank (10) storing liquefied gas; and
a liquefied gas collection line (L30) collecting the liquid liquefied gas discharged from the propulsion engine (E) upstream of the high pressure pump (22),
**characterized in that** the reliquefaction apparatus transfers the liquefied boil-off gas to the fuel tank (12), thereby allowing the liquefied boil-off gas to be supplied to the propulsion engine (E) by the high pressure pump (22).

2. The gas treatment system of claim 1, wherein the liquefied gas collection line (30) is provided with a decompression valve decompressing surplus liquid liquefied gas which is discharged from the propulsion engine (E) and is mixed with a lubricant, and transfers the surplus liquid liquefied gas mixed with the lubricant, which is used in the propulsion engine (E), to the liquefied gas supply line (L20) upstream of the high pressure pump (22) while passing through the inside of the propulsion engine (E) such that the surplus liquid liquefied gas mixed with the lubricant is reintroduced into the propulsion engine (E).

3. The gas treatment system of claim 2, wherein the liquefied gas collection line (L30) is provided with a cooler (41) cooling the liquefied gas decompressed by the decompression valve to be introduced in a liquid phase into the high pressure pump (22).

4. The gas treatment system of claim 1, wherein the reliquefaction apparatus includes:
a compressor (31) compressing in multiple stages the boil-off gas discharged from the cargo tank (10);
a condenser (32) cooling an liquefying the compressed boil-off gas by using a refrigerant; and
an intercooler (34) heat-exchanging a portion and the other portion of the boil-off gas liquefied in the condenser (32) with each other, the intercooler (34) transferring the boil-off gas generated by the heat exchange to the compressor (31).

5. The gas treatment system of claim 4, wherein the reliquefaction apparatus further includes a gas-liquid separator (33) separating the boil-off gas liquefied in the condenser (32) into a gaseous phase and a liquid phase, and
wherein the reliquefaction apparatus is operated in at least one of a reliquefaction mode in which the liquid phase separated in the gas-liquid separator (33) is transferred to the cargo tank (10) via the intercooler (34) and a fuel supply mode in which the liquid phase separated in the gas-liquid separator (33) is transferred to the fuel tank (12) to be supplied to the propulsion engine (E).

6. The gas treatment system of claim 1, wherein the reliquefaction apparatus includes:
a compressor (31) compressing in multiple stages the boil-off gas discharged from the cargo tank (10);
a condenser (32) cooling and liquefying the compressed boil-off gas; and
a boil-off gas heat exchanger (37) heat-exchanging boil-off gas transferred from the cargo tank (10) to the compressor (31) and the boil-off gas liquefied in the condenser (32).

7. The gas treatment system of claim 6, wherein the reliquefaction apparatus further includes a gas-liquid separator (33) separating the boil-off gas liquefied in the condenser (32) into a gaseous phase and a liquid phase, and
wherein the reliquefaction apparatus is operated in at least one of a reliquefaction mode in which the liquid phase separated in the gas-liquid separator (33) is transferred to the cargo tank (10) via the boil-off gas heat exchanger (37) and a fuel supply mode in which the liquid phase separated in the gas-liquid separator (33) is transferred to the fuel tank (12) to be supplied to the propulsion engine (E).

8. A liquefied gas carrier comprising the gas treatment system of any one of claims 1 to 7.

## Patentansprüche

1. Gasbehandlungssystem zum Behandeln von Flüssiggas, wie schwerere Kohlenwasserstoffe oder Ammoniak, wobei das Gasbehandlungssystem Folgendes umfasst:
einen Antriebsmotor (E) eines Schiffs;
einen Brennstofftank (12), der Flüssiggas als einen Brennstoff dazu speichert, dem Antriebsmotor (E) zugeführt zu werden;
eine Flüssiggaszufuhrleitung (L20), die das Flüssiggas des Brennstofftanks (12) in einer flüssigen Phase dem Antriebsmotor (E) zuführt, wobei die Flüssiggaszufuhrleitung (L20) eine daran bereitgestellte Hochdruckpumpe (22) aufweist;
eine Rückverflüssigungsvorrichtung, die in einem Flüssiggas speichernden Ladetank (10) erzeugtes Boil-off-Gas verflüssigt; und
eine Flüssiggassammelleitung (L30), die das flüssige Flüssiggas, das von dem Antriebsmotor (E) abgegeben wird, stromaufwärts der Hochdruckpumpe (22) sammelt,
**dadurch gekennzeichnet, dass** die Rückverflüssigungsvorrichtung das verflüssigte Boil-off-Gas zu dem Brennstofftank (12) transferiert, was dadurch ermöglicht, dass das verflüssigte Boil-off-Gas durch die Hochdruckpumpe (22) dem Antriebsmotor (E) zugeführt wird.

2. Gasbehandlungssystem nach Anspruch 1, wobei die Flüssiggassammelleitung (30) mit einem Dekompressionsventil versehen ist, das überschüssiges flüssiges Flüssiggas entspannt, das aus dem Antriebsmotor (E) abgegeben wird und mit einem Schmiermittel gemischt ist, und das mit dem Schmiermittel gemischte überschüssige flüssige Flüssiggas, das in dem Antriebsmotor (E) verwendet wird, zu der Flüssiggaszufuhrleitung (L20) stromaufwärts der Hochdruckpumpe (22) transferiert, während es durch das Innere des Antriebsmotors (E) durchläuft, derart, dass das mit dem Schmiermittel gemischte überschüssige flüssige Flüssiggas wieder in den Antriebsmotor (E) eingeführt wird.

3. Gasbehandlungssystem nach Anspruch 2, wobei die Flüssiggassammelleitung (L30) mit einem Kühler (41) versehen ist, der das durch das Dekompressionsventil entspannte Flüssiggas dazu kühlt, in einer flüssigen Phase in die Hochdruckpumpe (22) eingeführt zu werden.

4. Gasbehandlungssystem nach Anspruch 1, wobei die Rückverflüssigungsvorrichtung Folgendes beinhaltet:
einen Kompressor (31), der das aus dem Ladetank (10) abgegebene Boil-off-Gas in mehreren Phasen komprimiert;
einen Kondensator (32), der das komprimierte Boil-off-Gas unter Verwendung eines Kältemittels kühlt und verflüssigt; und
einen Zwischenkühler (34), der einen Teil und den anderen Teil des in dem Kondensator (32) verflüssigten Boil-off-Gases miteinander wärmetauscht, wobei der Zwischenkühler (34) das durch den Wärmeaustausch erzeugte Boil-off-Gas zu dem Kompressor (31) transferiert.

5. Gasbehandlungssystem nach Anspruch 4, wobei die Rückverflüssigungsvorrichtung ferner einen Gas-Flüssigkeits-Abscheider (33) beinhaltet, der das in dem Kondensator (32) verflüssigte Boil-off-Gas in eine gasförmige Phase und eine flüssige Phase trennt, und
wobei die Rückverflüssigungsvorrichtung in mindestens einem von einem Rückverflüssigungsmodus, in dem die in dem Gas-Flüssigkeits-Abscheider (33) getrennte flüssige Phase über den Zwischenkühler (34) zu dem Ladetank (10) transferiert wird, und einem Brennstoffzufuhrmodus betrieben wird, in dem die in dem Gas-Flüssigkeits-Abscheider (33) getrennte flüssige Phase zu dem Brennstofftank (12) dazu transferiert wird, dem Antriebsmotor (E) zugeführt zu werden.

6. Gasbehandlungssystem nach Anspruch 1, wobei die Rückverflüssigungsvorrichtung Folgendes beinhaltet:
einen Kompressor (31), der das aus dem Ladetank (10) abgegebene Boil-off-Gas in mehreren Phasen komprimiert;
einen Kondensator (32), der das komprimierte Boil-off-Gas kühlt und verflüssigt; und
einen Boil-off-Gas-Wärmetauscher (37), der von dem Ladetank (10) zu dem Kompressor (31) transferiertes Boil-off-Gas und das in dem Kondensator (32) verflüssigte Boil-off-Gas wärmetauscht.

7. Gasbehandlungssystem nach Anspruch 6, wobei die Rückverflüssigungsvorrichtung ferner einen Gas-Flüssigkeits-Abscheider (33) beinhaltet, der das in dem Kondensator (32) verflüssigte Boil-off-Gas in eine gasförmige Phase und eine flüssige Phase trennt, und
wobei die Rückverflüssigungsvorrichtung in mindestens einem von einem Rückverflüssigungsmodus, in dem die in dem Gas-Flüssigkeits-Abscheider (33) getrennte flüssige Phase über den Boil-off-Gas-Wärmetauscher (37) zu dem Ladetank (10) transferiert wird, und einem Brennstoffzufuhrmodus betrieben wird, in dem die in dem Gas-Flüssigkeits-Abscheider (33) getrennte flüssige Phase zu dem Brennstofftank (12) dazu transferiert wird, dem Antriebsmotor (E) zugeführt zu werden.

8. Flüssiggasträger, umfassend das Gasbehandlungssystem nach einem der Ansprüche 1 bis 7.

## Revendications

1. Système de traitement de gaz pour traiter du gaz liquéfié, tel que des hydrocarbures lourds ou de l'ammoniac, le système de traitement de gaz comprenant :
un moteur de propulsion (E) d'un navire ;
un réservoir de carburant (12) stockant du gaz liquéfié en tant que carburant destiné à être fourni au moteur de propulsion (E) ;
une conduite d'alimentation en gaz liquéfié (L20) acheminant le gaz liquéfié du réservoir de carburant (12), en phase liquide, vers le moteur de propulsion (E), la conduite d'alimentation en gaz liquéfié (L20) comportant une pompe haute pression (22) qui y est installée ;
un appareil de reliquéfaction qui liquéfie du gaz d'évaporation généré dans un réservoir de cargaison (10) stockant du gaz liquéfié ; et
une conduite de collecte de gaz liquéfié (L30) qui recueille le gaz liquéfié sous forme liquide sortant du moteur de propulsion (E) en amont de la pompe haute pression (22),
**caractérisé en ce que** l'appareil de reliquéfaction transfère le gaz d'évaporation liquéfié vers le réservoir de carburant (12), permettant ainsi au gaz d'évaporation liquéfié d'être acheminé vers le moteur de propulsion (E) par la pompe haute pression (22).

2. Système de traitement de gaz selon la revendication 1, où la conduite de collecte de gaz liquéfié (30) est pourvue d'une soupape de décompression qui décomprime du gaz liquéfié liquide excédentaire qui sort du moteur de propulsion (E) et est mélangé à un lubrifiant, et transfère le gaz liquéfié liquide excédentaire mélangé au lubrifiant, qui est utilisé dans le moteur de propulsion (E), vers la conduite d'alimentation en gaz liquéfié (L20) en amont de la pompe haute pression (22) tout en traversant l'intérieur du moteur de propulsion (E), de telle sorte que le gaz liquéfié liquide excédentaire mélangé au lubrifiant soit réintroduit dans le moteur de propulsion (E).

3. Système de traitement de gaz selon la revendication 2, où la conduite de collecte de gaz liquéfié (L30) est pourvue d'un refroidisseur (41) qui refroidit le gaz liquéfié décomprimé par la vanne de décompression afin qu'il soit introduit sous forme liquide dans la pompe haute pression (22).

4. Système de traitement de gaz selon la revendication 1, où l'appareil de reliquéfaction inclut :
un compresseur (31) comprimant en plusieurs étages le gaz d'évaporation sortant du réservoir de cargaison (10) ;
un condensateur (32) refroidissant et liquéfiant le gaz d'évaporation comprimé à l'aide d'un fluide réfrigérant ; et
un échangeur thermique intermédiaire (34) assurant un échange thermique entre une partie et l'autre partie du gaz d'évaporation liquéfié dans le condensateur (32), l'échangeur thermique intermédiaire (34) transférant le gaz d'évaporation généré par l'échange thermique vers le compresseur (31).

5. Système de traitement de gaz selon la revendication 4, où l'appareil de reliquéfaction inclut en outre un séparateur gaz-liquide (33) séparant le gaz d'évaporation liquéfié dans le condensateur (32) en une phase gazeuse et une phase liquide, et
où l'appareil de reliquéfaction fonctionne selon au moins un mode parmi un mode de reliquéfaction dans lequel la phase liquide séparée dans le séparateur gaz-liquide (33) est transférée vers le réservoir de cargaison (10) via l'échangeur thermique intermédiaire (34), et un mode d'alimentation en carburant dans lequel la phase liquide séparée dans le séparateur gaz-liquide (33) est transférée vers le réservoir de carburant (12) pour être fournie au moteur de propulsion (E).

6. Système de traitement de gaz selon la revendication 1, où l'appareil de reliquéfaction inclut :
un compresseur (31) comprimant en plusieurs étages le gaz d'évaporation sortant du réservoir de cargaison (10) ;
un condensateur (32) refroidissant et liquéfiant le gaz d'évaporation comprimé ; et
un échangeur de chaleur de gaz d'évaporation (37) assurant un échange thermique entre le gaz d'évaporation transféré du réservoir de cargaison (10) vers le compresseur (31) et le gaz d'évaporation liquéfié dans le condensateur (32).

7. Système de traitement de gaz selon la revendication 6, où l'appareil de reliquéfaction inclut en outre un séparateur gaz-liquide (33) séparant le gaz d'évaporation liquéfié dans le condensateur (32) en une phase gazeuse et une phase liquide, et
où l'appareil de reliquéfaction fonctionne selon au moins un mode parmi un mode de reliquéfaction dans lequel la phase liquide séparée dans le séparateur gaz-liquide (33) est transférée vers le réservoir de cargaison (10) via l'échangeur de chaleur de gaz d'évaporation (37), et un mode d'alimentation en carburant dans lequel la phase liquide séparée dans le séparateur gaz-liquide (33) est transférée vers le réservoir de carburant (12) pour être fournie au moteur de propulsion (E).

8. Transporteur de gaz liquéfié comprenant le système de traitement de gaz selon l'une quelconque des revendications 1 à 7.
